# EUROPEAN PATENT APPLICATION

(11) **EP 3 881 977 A1**
(43) Date of publication of application: **22.09.2021**
(21) Application number: 20164574.4
(22) Date of filing: 20.03.2020
(51) Int. Cl.: B25J 9/00, B25J 9/08, B25J 11/00, B25J 15/04, F24F 13/02

(54) **ROBOT ARM FOR A DOMESTIC APPLIANCE, IN PARTICULAR FOR A KITCHEN APPLIANCE**

(71) Applicant: ELECTROLUX APPLIANCES AKTIEBOLAG, 105 45 Stockholm (SE)
(72) Inventor: KRAUßE, Constantin, 91541 Rothenburg o. d. Tauber (DE)
(74) Representative: Electrolux Group Patents

(57) **Abstract**

The present invention relates to a robot arm (10) for a domestic appliance, in particular for a kitchen appliance. The robot arm (10) comprises a base module (12) for fastening said robot arm (10) at or on the domestic appliance or in the environment of said domestic appliance. The robot arm (10) comprises at least one end module (22) adapted or adaptable for specific functions. The robot arm (10) comprises at least one drive unit (14, 16, 18) interconnected between the base module (12) and the end module (22). The end module (22) is exchangeable by the user.

## Description

The present invention relates to a robot arm for a domestic appliance. In particular, the present invention relates to a robot arm for a kitchen appliance. Further, the present invention relates to a domestic appliance, in particular a kitchen appliance.

Robots and robot arms for domestic appliances are well known. Usually, the robots are integrated parts of or prepared for special domestic appliances. Further, the robots are typically provided for predetermined functions. A household with several domestic appliances requires different robots for said domestic appliances and specific functions.

It is an object of the present invention to provide a robot arm for a domestic appliance, which allows multiple uses with different domestic appliances.

The object is achieved by the robot arm for a domestic appliance according to claim 1.

According to the present invention a robot arm for a domestic appliance, in particular for a kitchen appliance, is provided, wherein:
- the robot arm comprises a base module for fastening said robot arm at or on the domestic appliance or in the environment of said domestic appliance,
- the robot arm comprises at least one end module adapted or adaptable for specific functions,
- the robot arm comprises at least one drive unit interconnected between the base module and the end module, and
- the end module is exchangeable by the user.

The core of the present invention is that the end module of the robot arm is exchangeable by the user, so that the robot arm is adaptable to the current application. Further, the base module of the robot arm is fixable at or on the domestic appliance or in the environment of said domestic appliance by the user, so that the position of the robot arm is adaptable to the domestic appliance and the current application. The robot arm of the present invention may be used for an already existing domestic appliance.

In particular, the robot arm comprises a plurality of end modules adapted or adaptable for different specific functions.

Preferably, the robot arm comprises a plurality of drive units serially interconnected between the base module and the end module.

For example, the robot arm comprises at least one longitudinal rotary drive unit for generating a rotation around a main axis, wherein said main axis is the connecting line between the both drive units or modules, respectively, adjacent to said longitudinal rotary drive unit.

Further, the robot arm may comprise at least one translatory drive unit for generating a shift along the main axis, wherein said main axis is the connecting line between the both drive units or modules, respectively, adjacent to said translatory drive unit.

Moreover, the robot arm may comprise at least one transversal rotary drive unit for generating a rotation perpendicular to the main axis, wherein said main axis is the connecting line between the both drive units or modules, respectively, adjacent to said transversal rotary drive unit.

Additionally, the robot arm may comprise at least one branching module for providing at least one branch-off for one or more further robot arms.

In particular, the robot arm is dismountable by the user. The structure of the robot arm is adaptable to the current application.

Further, the drive units and/or the branching module may be compoundable in different combinations and in an arbitrary order by the user.

According to one embodiment, the end module includes at least one suction funnel and/or suction snorkel connected or connectable to at least one suction device via at least one suction hose.

According to a further embodiment, the end module includes at least one gripping device, wherein preferably said gripping device is adapted for moving cookware, delivering food to the cookware or oven cavity and/or for removing said food from said cookware or oven cavity, respectively.

Moreover, the end module may include at least one sensor, for example a camera, a temperature sensor, a humidity sensor and/or a sensor for recognising food or the state of said food.

Additionally, the end module may include at least one illumination unit, food printer, cleaning brush, stirrer or any other tool.

Preferably, the robot arm is controllable by at least one control unit via at least one wired and/or wireless connection, wherein said control unit is an integrated part of the robot arm, a part of the corresponding domestic appliance or a mobile or stationary remote control device, e.g. a personal computer, a notebook or a smart phone.

At last, the present invention relates to a domestic appliance, in particular a kitchen appliance, wherein the domestic appliance comprises or corresponds with at least one robot arm according to any one of the preceding claims.

Novel and inventive features of the present invention are set forth in the appended claims.

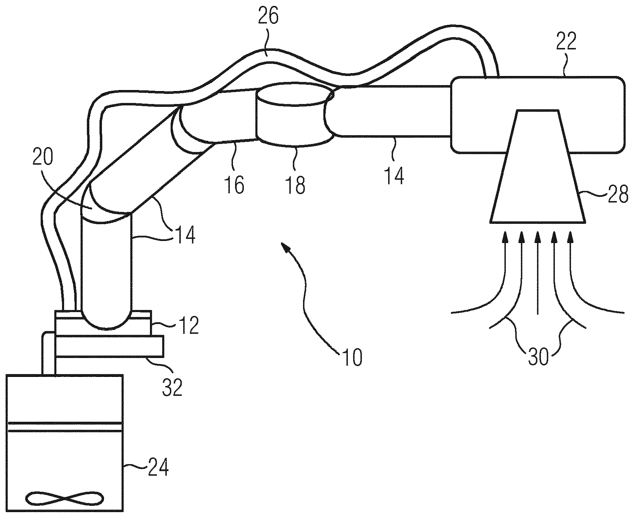

The present invention will be described in further detail with reference to the drawing, in which
- FIG 1: illustrates a schematic sectional side view of a robot arm for a domestic appliance according to a preferred embodiment of the present invention.

FIG 1 illustrates a schematic sectional side view of a robot arm 10 for a domestic appliance according to a preferred embodiment of the present invention. In this example, the robot arm 10 is applied for an exhaust device. In general, the robot arm 10 may be applied for an arbitrary domestic appliance. In particular, the robot arm 10 is applied for a kitchen appliance.

The robot arm 10 comprises a base module 12 and an end module 22. One or more drive units 14, 16 and 18 are serially interconnected between said base module 12 and end module 22. In this example, three longitudinal rotary drive units 14, one translatory drive unit 16, one transversal rotary drive unit 18 and an optional branching module 20 are interconnected between the base module 12 and the end module 22. Between the base module 12 and the end module 22 the drive units 14, 16 and 18 and the branching module 20 are arranged in the following order: the first longitudinal rotary drive unit 14, the branching module 20, the second longitudinal rotary drive unit 14, the translatory drive unit 16, the transversal rotary drive unit 18 and the third longitudinal rotary drive unit 14.

In this example, the base module 12 is fastened upon a mounting plate 32. Further, the base module 12 may be fastened on a worktop, on a cooking hob or at a side wall. In general, the base module 12 may be fastened in an arbitrary suitable place of the house. The base module 12 may be in direct contact with the domestic appliance or the robot arm 10 may be a stand-alone device.

Each longitudinal rotary drive unit 14 includes two components being rotary to each other around a main axis. Said main axis is the connecting line between the both drive units 14, 16, 18 or modules 12, 20, 22, respectively, adjacent to said longitudinal rotary drive unit 14. The translatory drive unit 16 includes two components shiftable to each other along the main axis of said translatory drive unit 16. The transversal rotary drive unit 18 includes two components being rotary to each other perpendicularly to the main axis of said transversal rotary drive unit 18. Each component of the drive units 14, 16 and 18 is rigidly coupled to the closest component of the adjacent drive unit 14, 16, 18 or module 12, 20, 22, respectively.

The end module 22 is dismountable from the robot arm 10 by the user. Preferably, the robot arm 10 comprises several different end modules 22 exchangeable by the user. For example, the end module 22 is a gripping device, an illumination unit, a camera, a temperature sensor, any other sensor, air suction means, a food printer, a cleaning brush, a stirrer or any other tool. The gripping device may be used for moving cookware. Further, the gripping device is provided for delivering food to the cookware or oven cavity and for removing said food from said cookware or oven cavity, respectively. Moreover, the gripping device is provided for turning food in the pan. The end module 22 may be used for recognising the food to be prepared and the state of said food.

Moreover, the robot arm 10 is dismountable by the user. The drive units 14, 16, 18 and the branching module 20 are compoundable in different combinations and in an arbitrary order by the user. Thus, the robot arm 10 may have different sizes, weights, appearances and functionalities. The at least one branching module 20 allows a branch-off of one or more further robot arms, so that the robot arm 10 gets a tree structure.

The robot arm 10 is controllable via a wired or wireless connection. The robot arm 10 may be controlled by an own control unit, a control unit of the corresponding domestic appliance or by a mobile or stationary remote control device, e.g. a personal computer, a notebook or a smart phone.

In this embodiment, the robot arm 10 is used in combination with a suction device 24. Said suction device 24 is arranged close to the robot arm 10. In particular, the suction device 24 is arranged beneath the worktop. The suction device 24 includes a suction fan. Preferably, the suction device 24 includes a filter. The end module 22 includes a suction funnel 28. Said suction funnel 28 is connected to the suction device 24 via a suction hose 26. In this example, said suction hose 26 extend parallel to the robot arm 10. In general, the suction hose 26 may proceed between the suction device 24 and the suction funnel 28 in an arbitrary way.

The robot arm 10 with the suction device 24 and the suction funnel 28 is suitable for a cooking hob. In this case, a suction hood is not required for said cooking hob. Further, the robot arm 10 with the suction device 24 can be used for cooking ovens and microwave ovens. In general, the robot arm 10 with suction function is suitable for releasing hot air, humidity, steam and/or smell.

Further, the suction funnel 28 or a smaller suction snorkel may be directly attached on the cookware or at the lid of said cookware. The flexibility of the robot arm 10 with the suction device 24 allows to perform an optimal suction.

The robot arm 10 according to the present invention is suitable for domestic appliances already existing. The modular structure of the robot arm 10 allows an individual adaption of said robot arm 10 to the domestic appliances and the current application.

Although an illustrative embodiment of the present invention has been described herein with reference to the accompanying drawing, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: robot arm
- 12: base module
- 14: longitudinal rotary drive unit
- 16: translatory drive unit
- 18: transversal rotary drive unit
- 20: branching module
- 22: end module
- 24: suction device
- 26: suction hose
- 28: suction funnel
- 30: sucked air
- 32: mounting plate

## Claims

1. A robot arm (10) for a domestic appliance, in particular for a kitchen appliance, wherein:
- the robot arm (10) comprises a base module (12) for fastening said robot arm (10) at or on the domestic appliance or in the environment of said domestic appliance,
- the robot arm (10) comprises at least one end module (22) adapted or adaptable for specific functions,
- the robot arm (10) comprises at least one drive unit (14, 16, 18) interconnected between the base module (12) and the end module (22), and
- the end module (22) is exchangeable by the user.

2. The robot arm according to claim 1,
**characterised in that**
the robot arm (10) comprises a plurality of end modules (22) adapted or adaptable for different specific functions.

3. The robot arm according to claim 1 or 2,
**characterised in that**
the robot arm (10) comprises a plurality of drive units (14, 16, 18) serially interconnected between the base module (12) and the end module (22).

4. The robot arm according to any one of the preceding claims,
**characterised in that**
the robot arm (10) comprises at least one longitudinal rotary drive unit (14) for generating a rotation around a main axis, wherein said main axis is the connecting line between the both drive units (14, 16, 18) or modules (12, 20, 22), respectively, adjacent to said longitudinal rotary drive unit (14).

5. The robot arm according to any one of the preceding claims,
**characterised in that**
the robot arm (10) comprises at least one translatory drive unit (16) for generating a shift along the main axis, wherein said main axis is the connecting line between the both drive units (14, 16, 18) or modules (12, 20, 22), respectively, adjacent to said translatory drive unit (14).

6. The robot arm according to any one of the preceding claims,
**characterised in that**
the robot arm (10) comprises at least one transversal rotary drive unit (18) for generating a rotation perpendicular to the main axis, wherein said main axis is the connecting line between the both drive units (14, 16, 18) or modules (12, 20, 22), respectively, adjacent to said transversal rotary drive unit (18).

7. The robot arm according to any one of the preceding claims,
**characterised in that**
the robot arm (10) comprises at least one branching module (20) for providing at least one branch-off for one or more further robot arms.

8. The robot arm according to any one of the preceding claims,
**characterised in that**
the robot arm (10) is dismountable by the user.

9. The robot arm according to any one of the preceding claims,
**characterised in that**
the drive units (14, 16, 18) and/or the branching module (20) are compoundable in different combinations and in an arbitrary order by the user.

10. The robot arm according to any one of the preceding claims,
**characterised in that**
the end module (22) includes at least one suction funnel (28) and/or suction snorkel connected or connectable to at least one suction device (24) via at least one suction hose (26) .

11. The robot arm according to any one of the preceding claims,
**characterised in that**
the end module (22) includes at least one gripping device, wherein preferably said gripping device is adapted for moving cookware, delivering food to the cookware or oven cavity and/or for removing said food from said cookware or oven cavity, respectively.

12. The robot arm according to any one of the preceding claims,
**characterised in that**
the end module (22) includes at least one sensor, for example a camera, a temperature sensor, a humidity sensor and/or a sensor for recognising food or the state of said food.

13. The robot arm according to any one of the preceding claims,
**characterised in that**
the end module (22) includes at least one illumination unit, food printer, cleaning brush, stirrer or any other tool.

14. The robot arm according to any one of the preceding claims,
**characterised in that**
the robot arm (10) is controllable by at least one control unit via at least one wired and/or wireless connection, wherein said control unit is an integrated part of the robot arm (10), a part of the corresponding domestic appliance or a mobile or stationary remote control device, e.g. a personal computer, a notebook or a smart phone.

15. A domestic appliance, in particular a kitchen appliance,
**characterised in that**
the domestic appliance comprises or corresponds with at least one robot arm (10) according to any one of the preceding claims.
